# EUROPÄISCHE PATENTSCHRIFT

(11) **EP 0 408 860 B1**
(45) Veröffentlichungstag und Bekanntmachung des Hinweises auf die Patenterteilung: **27.01.1993**
(21) Anmeldenummer: 90109629.7
(22) Anmeldetag: 21.05.1990
(51) Int. Cl.: B23B 51/00

(54) **Vorrichtung zur Herstellung einer Hinterschneidung in einem Bohrloch**
Device for making an undercutting in a drilled hole
Dispositif pour fabriquer un chambrage dans un trou foré

(30) Priorität: 21.07.1989 DE 3924044
(43) Veröffentlichungstag der Anmeldung: 23.01.1991
(73) Patentinhaber: fischerwerke Artur Fischer GmbH & Co. KG, D-72178 Waldachtal (DE)
(72) Erfinder: Fischer, Arthur, Prof.-Dr. H.C., D-7244 Waldachtal 3/Tumlingen (DE)

(56) Entgegenhaltungen:
- EP-A- 0 038 917
- EP-A- 0 044 386
- GB-A- 2 005 572

## Beschreibung

Die Erfindung betrifft eine Vorrichtung zur Herstellung einer Hinterschneidung in einem Bohrloch gemäß der Gattung des Hauptanspruchs.

Zur Herstellung einer Hinterschneidung in einem Bohrloch kann ein Bohrer mit seitlich am Bohrkopf überstehenden Seitenschneiden verwendet werden. Die Hinterschneidung wird dabei so hergestellt, daß der Bohrkopf zunächst bis zum Bohrlochgrund eingeführt wird und dann in dieser Position verschwenkt wird. Dabei reibt der Bohrkopf im Bereich des Bohrlochgrundes eine Hinterschneidung aus, in die ein Spreizdübel mit einer aufspreizbaren Spreizhülse formschlüssig einsetzbar ist.

Derartige Bohrlöcher mit Hinterschneidung lassen sich auch in Fassadenplatten oder dergleichen einbringen, jedoch müssen dort die Hinterschneidungen sehr exakt ausgeführt werden, damit beim Einsetzen und Aufspreizen eines Spreizankers kein zu hoher Spreizdruck entsteht. Ein zu hoher Spreizdruck kann nämlich dazu führen, daß ein Teil der Fassadenplatte wegplatzt. Um eine exakte Hinterschneidung herzustellen, kann ein Bohrkopf mit Diamantfräser verwendet werden, der jedoch während des Ausreibens der Hinterschneidung von dem dabei anfallenden Steinmehl in seiner Wirkungsweise stark beeinträchtigt wird.

Der Erfindung liegt die Aufgabe zugrunde, eine Vorrichtung zur Herstellung einer Hinterschneidung in einem Bohrloch zu schaffen, die die Verwendung eines Diamant-Fräsers oder dergleichen ermöglicht.

Die Lösung dieser Aufgabe wird durch die im Hauptanspruch angegebenen Merkmale erhalten. Durch die Verwendung eines Lagerteils, in dem eine zur Lagerfläche führende Bohrung ausgebildet ist, kann über eine Anschlußöffnung und einen daran angeschlossenen Schlauch Bohrflüssigkeit während des Ausreibens der Hinterschneidung ständig zugeführt werden. Als Bohrflüssigkeit kann Wasser verwendet werden, welches durch eine am Bund des Bohrwerkzeugs ausgebildete Nut zum Bohrkopf bzw. Fräskopf gelangt. Durch die Rotation des Bohrwerkzeugs bewirkt die sich mitdrehende Nut, daß das Wasser in das Bohrloch strömt und dort anfallendes Bohrmehl wegspült. Versuche haben gezeigt, daß mit einer derartigen Vorrichtung besonders genaue Hinterschneidungen herstellbar sind, die eine äußerst glatte Wandung besitzen.

Der Bund ist vorzugsweise als Halbkugel ausgebildet und sitzt in einer als Lagerpfanne ausgebildeten Lagerfläche des Lagerteils, wobei die Radien der Halbkugel und der Lagerpfanne wenigstens annähernd gleich sind.

Am Lagerteil kann ein angeformter Zentrieransatz ausgebildet sein, der beim Ausreibvorgang in das Bohrloch im Bereich der Bohrlochöffnung eingreift und das Lagerteil fixiert. Der Außendurchmesser des Zentrieransatzes ist daher an den Durchmesser des Bohrloches im Bereich der Bohrlochöffnung angepaßt.

Die Erfindung wird nachfolgend anhand der Zeichnung näher erläutert.

Es zeigen:
Figur 1 eine erfindungsgemäße Vorrichtung teilweise im Schnitt,
Figur 2 das im Lagerteil gemäß Figur 1 befindliche Bohrwerkzeug und
Figur 3 eine Gesamtansicht der erfindungsgemäßen Vorrichtung mit Lagerteil und Bohrwerkzeug.

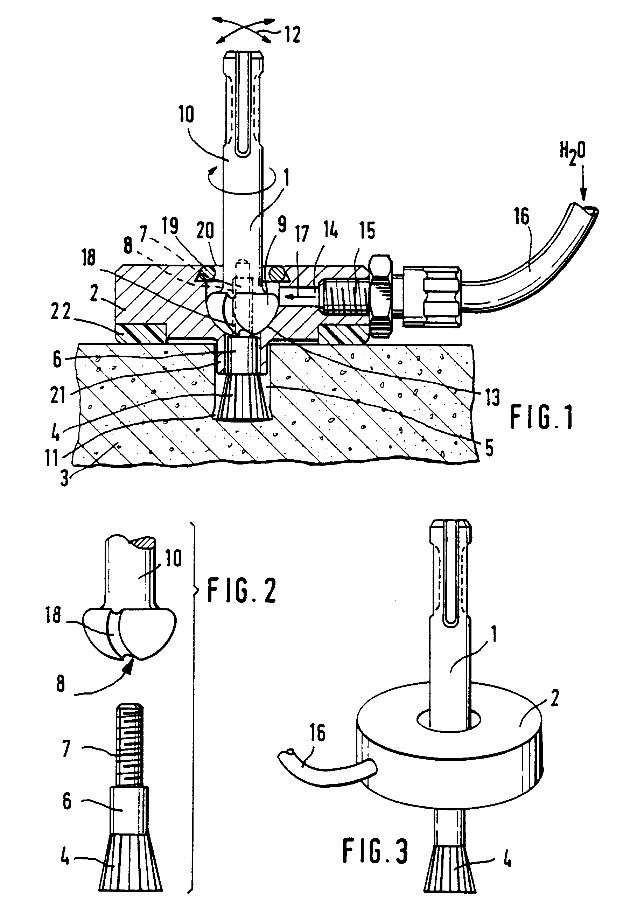

In Figur 1 ist die Vorrichtung zur Herstellung einer Hinterschneidung in einem Bohrloch gezeigt, die im wesentlichen aus einem Bohrwerkzeug 1 und einem Lagerteil 2 besteht. Das Lagerteil 2 liegt auf der Wandoberfläche einer Fassadenplatte 3 auf. Das Bohrwerkzeug 1 greift mit seinem Bohrkopf 4 in eine Bohrung 5 ein. Der Bohrkopf 5 geht in einen geraden Schaft 6 über, der mit einem Gewindezapfen 7 in eine entsprechende Gewindebohrung eingeschraubt ist. Die Gewindebohrung 8 befindet sich in einem halbkugelförmigen Bund 9, der am unteren Ende eines Schaftes 10 ausgebildet ist. Der Schaft 10 wird zur Herstellung der Hinterschneidung 11 in die hier nicht dargestellte Bohreraufnahme einer Bohrmaschine eingespannt und in Rotation versetzt. Durch ein gleichzeitiges seitliches Verschwenken, welches durch die Pfeile 12 angedeutet ist, kann die Hinterschneidung 11 im Bohrloch 5 ausgerieben werden.

Das Bohrwerkzeug 1 ist mit seinem Bund 9 in einer entsprechend halbkugelförmigen Lagerfläche 13 gelagert. Die Lagerfläche 13 kann auch als Lagerpfanne bezeichnet werden, die am Lagerteil 2 ausgebildet ist. Zu dieser Lagerfläche 13 führt eine im Lagerteil 2 verlaufende Bohrung 14, durch die Wasser oder dergleichen in Richtung Bund 9 eingeleitet werden kann. Zu diesem Zweck ist außen am Lagerteil 2 eine Anschlußöffnung 15 vorgesehen, an die ein Schlauch 16 für die Wasserzufuhr angeschlossen ist.

Damit das in Pfeilrichtung 17 einströmende Wasser zum Bohrkopf 4 gelangen kann, besitzt der Bund 9 eine außen verlaufende Nut 18, die gegenüber der Längsachse des Werkzeugs 1 geringfügig geneigt ist. Es können statt einer Nut 18 auch zwei oder mehrere Nuten vorgesehen sein, wenn dies für den jeweiligen Anwendungsfall als zweckmäßig erachtet wird.

Ein Federring 19 ist in eine Montageöffnung 20 des Lagerteils 2 eingesetzt und sichert das Werkzeug 1 in axialer Richtung. An der Unterseite des Lagerteils 2 steht ein Zentrieransatz 21 ab, der in die Bohrung 5 hineinragt und das Lagerteil 2 fixiert und zentriert.

In Figur 2 ist das untere Ende des Schaftes 10 mit dem halbkugelförmigen Bund 9 dargestellt, der eine axiale Gewindebohrung 8 besitzt. Das untere Teil des Werkzeugs, an dem der Bohrkopf 4 ausgebildet ist, wird mit einem axial abstehenden Gewindestift 7 in diese Bohrung 8 eingeschraubt und somit mit dem oberen Teil des Werkzeugs 1 verbunden.

In Figur 3 ist die erfindungsgemäße Vorrichtung von Figur 1 perspektivisch und verkleinert dargestellt.

An der Unterseite des Lagerteils 2 ist ein elastischer Ring 22 in eine entsprechende Aussparung eingesetzt. Auf diese Weise erhält man an der Unterseite des Lagerteils 2 eine griffige, elastische Ringfläche, die das Lagerteil 2 gegen Mitdrehen beim Ausreibvorgang sichert.

## Patentansprüche

1. Vorrichtung zur Herstellung einer Hinterschneidung in einem Bohrloch eines Mauerwerks oder dergleichen, bestehend aus einem Fräs- oder Bohrwerkzeug (1), welches in einem Lagerteil (2) drehbar und schwenkbar gelagert und mit seinem Schaft (10) in eine Bohrmaschine einspannbar ist, wobei an seinem Schaft ein gerundeter Bund (9) absteht, der in einer entsprechend gewölbten Lagerfläche (13) im Lagerteil einliegt, **dadurch gekennzeichnet**, daß im Lagerteil (2) eine Bohrung (14) ausgebildet ist, die von einer außen am Lagerteil (2) angeordneten Anschlußöffnung (15) zur gewölbten Lagerfläche (13) des Lagerteils (2) führt und an deren Anschlußöffnung (15) ein Schlauch (16) oder dergleichen angeschlossen ist, und daß am Bund (9) wenigstens eine gegenüber der Längsachse des Schaftes (10) und der Umfangsrichtung des Bundes (9) geneigte Nut (18) verläuft.

2. Vorrichtung nach Anspruch 1, **dadurch gekennzeichnet**, daß der Bund (9) und die Lagerfläche (13) kugelförmig gerundet sind.

3. Vorrichtung nach einem der Ansprüche 1 oder 2, **dadurch gekennzeichnet**, daß der Bund (9) als Halbkugel und die Lagerfläche (13) als Lagerpfanne mit wenigstens annähernd gleichem Radius ausgebildet sind.

4. Vorrichtung nach einem der vorhergehenden Ansprüche, **dadurch** **gekennzeichnet**, daß das Fräs- oder Bohrwerkzeug (1) mittels eines Federrings (19) im Lagerteil (2) gesichert ist.

5. Vorrichtung nach einem der vorhergehenden Ansprüche, **dadurch** **gekennzeichnet**, daß am Lagerteil (2) ein Zentrieransatz (21) in Richtung Bohrkopf (4) absteht.

6. Vorrichtung nach einem der vorhergehenden Ansprüche, **dadurch** **gekennzeichnet**, daß an der Seite des Lagerteils (2), die dem Bohrkopf (4) zugewandt ist, in einer Aussparung ein elastischer Ring (22) eingesetzt ist und eine griffige und elastische Ringfläche bildet.

## Claims

1. A device for producing an undercut in a hole drilled in masonry or similar material, consisting of a milling or drilling tool (1) which is rotatably and pivotally mounted in a bearing part (2) and with its shank (10) can be clamped in a drilling machine, wherein at the shank there projects a rounded collar (9) which lies in a correspondingly concave bearing surface (13) in the bearing part, characterized in that in the bearing part (2) there is formed a bore (14) which leads from a connecting opening (15) arranged externally on the bearing part (2) to the concave bearing surface (13) of the bearing part (2) and to the connecting opening (15) of which is attached a hose (16) or similar means, and on the collar (9) there extends at least one groove (18) inclined with respect to the longitudinal axis of the shank (10) and the circumferential direction of the collar (9).

2. A device according to claim 1, characterized in that the collar (9) and the bearing surface (13) are spherically rounded.

3. A device according to one of claims 1 or 2, characterized in that the collar (9) is of hemispherical construction and the bearing surface (13) is constructed as a bearing dish with at least approximately the same radius.

4. A device according to one of the preceding claims, characterized in that the milling or drilling tool (1) is secured in the bearing part (2) by means of a ring-shaped spring member (19).

5. A device according to one of the preceding claims, characterized in that on the bearing part (2) a centering extension (21) extends in the direction of the drill bit head (4).

6. A device according to one of the preceding claims, characterized in that on the side of the bearing part (2) facing the drill bit head (4) there is inserted in a recess a resilient ring (22) which forms a non-slip and resilient annular surface.

## Revendications

1. Dispositif destiné à exécuter un chambrage dans un trou borgne d'un mur ou maçonnerie analogue, dispositif composé d'un outil (1) de fraisage ou de perçage, qui est logé dans un palier (2) d'appui, peut y tourner et y osciller et dont la tige (10) peut être serrée dans une perceuse, un collet (9) arrondi, qui fait saillie de cette tige, étant logé dans une surface (13) de portée concave correspondante du palier d'appui, dispositif caractérisé en ce que le palier (2) d'appui est percé d'un canal (14), qui va, d'un orifice (15) extérieur de raccordement de ce palier (2) à la surface arrondie (13) concave de portée dudit palier et auquel orifice (15) un tuyau souple (16) ou élément analogue est relié, et en ce qu'au moins une gorge (18), inclinée par rapport à l'axe longitudinal de la tige (10) et par rapport à la périphérie du collet (9), est formée dans ce collet (9).

2. Dispositif selon la revendication 1, caractérisé en ce que le collet (9) et la surface (13) de portée ont une forme sphérique.

3. Dispositif selon l'une des revendications 1 ou 2, caractérisé en ce que le collet (9) est hémisphérique, la surface (13) de portée formant une crapaudine ayant au moins sensiblement le même rayon.

4. Dispositif selon l'une des revendications précédentes, caractérisé en ce que l'outil (1) de fraisage ou de perçage est retenu dans le palier (2) d'appui au moyen d'un jonc (19) annulaire élastique.

5. Dispositif selon l'une des revendications précédentes, caractérisé en ce qu'un bossage (21) de centrage fait saillie du palier (2) d'appui, du côté de la tête (4) de perçage.

6. Dispositif selon l'une des revendications précédentes, caractérisé en ce qu'une bague (22) élastique est logée dans un évidement du coté du palier (2) d'appui tourné vers la tête (4) de perçage et forme une surface annulaire supérieure et élastique.
